# EUROPEAN PATENT APPLICATION

(11) **EP 4 782 679 A1**
(43) Date of publication of application: **29.07.2026**
(21) Application number: 25200392.6
(22) Date of filing: 05.09.2025
(51) Int. Cl.: F02M 21/02, F02M 55/00, F02M 55/02, F02B 37/00

(54) **FUEL SUPPLY SYSTEM**

(30) Priority: 23.01.2025 EP 25153643; 04.02.2025 EP 25155764; 18.02.2025 EP 25158509; 05.03.2025 WO PCT/EP2025/056001; 20.08.2025 WO PCT/EP2025/073778; 26.08.2025 EP 25198181
(71) Applicant: WinGD Ltd., 8400 Winterthur (CH)
(72) Inventor: Strödecke, Daniel, 8400 Winterthur (CH); Zagorskiy, Alexander, 5430 Wettingen (CH); Engelbrecht, Christoph, 8006 Zürich (CH)
(74) Representative: Hepp Wenger Ryffel AG

(57) **Abstract**

The present application concerns a fuel supply system, an internal combustion engine, a propulsion system, a use of a vacuum ejector, and a method for operating an internal combustion engine

The fuel supply system (100) for supplying a fuel, in particular methanol, ammonia, LNG, or LPG, to an internal combustion engine (200), in particular having at least one cylinder (210) with a bore having a diameter of at least 200 mm, comprises a fuel pipe (10) for guiding the fuel to at least one fuel injector (1) of the large combustion engine (200). The fuel pipe (10) comprises a fuel line (12), wherein the fuel pipe (10) comprises an outside fuel pipe section (10o) arrangeable outside of an engine room (226) hosting the at least one cylinder (210) and an inside fuel pipe section (10i) arrangeable inside of the engine room (226). The inside fuel pipe section (10i) comprises a fuel pipe space (11i) at least partly surrounding the fuel line (12). The fuel supply system (100) further comprises a return pipe (13) comprising a return line (15). The return pipe (13) comprises an outside return pipe section (13o) arrangeable outside of the engine room (226) and an inside return pipe section (13i) arrangeable inside of the engine room (226). The inside return pipe section (13i) comprises a return pipe space (14i) at least partly surrounding the return line (13). The fuel supply system (100) comprises an extraction line (20) which is fluidly connected or connectable to the fuel pipe space (11i) and/or to the return pipe space (14i).

## Description

### Technical Field

The present application concerns a fuel supply system, an internal combustion engine, a propulsion system, a marine vessel, a use of a vacuum ejector, and a method for operating an internal combustion engine.

Fuel supply lines for hazardous fuels generally comprise double-walled pipes. Air or an inert gas may be applied to the annular space encompassed by the double-walled pipe. A gas detector may be arranged in fluid connection to the annular space, such that in case a leak is detected the engine may be stopped or at least the operation with the hazardous fuel may be stopped. If a negligible amount of leaked fuel is detected in the annular space, the leaked fuel may be released into the environment. However, if the amount of the leaked fuel exceeds a critical limit, the leaked fuel may not be released into the environment.

The reduction of nitrogen oxides and nitrous oxide in the exhaust gas of an ammonia fueled engine is for example disclosed in DE 102022119570 A1. The exhaust gas aftertreatment system has an Fe-beta-zeolite catalytic converter for the simultaneous reduction of nitrogen oxides NOₓ and decomposition of dinitrogen monoxide N₂O in the exhaust gas, which is set up to use an ammonia slip in the exhaust gas at least proportionally as a reducing agent for the reduction of nitrogen oxides NOₓ in the exhaust gas. The exhaust gas aftertreatment system furthermore has an ammonia catalyst which is set up to convert ammonia not used as a reducing agent into water and into nitrogen.

It is an objective of the present invention to at least in part overcome the drawbacks of the prior art solutions.

### Disclosure of the invention

This objective is achieved by a fuel supply system, an internal combustion engine, a propulsion system, a marine vessel, a use of a vacuum ejector, and a method for operating an internal combustion engine, according to the independent claims.

Large engines, which can be configured as two-stroke or four-stroke engines, e.g. as longitudinally scavenged two-stroke large engines or two-stroke cross-head engines, are often used as drive units for ships, particularly large ships and vessels for the transport of goods, or in stationary operations such as driving large generators for generating electrical energy. The engines usually run for considerable periods in continuous operation, which places high demands on operational safety and availability.

Within the framework of this application, the term "large engine" designates an internal combustion engine with a bore of the cylinder(s) that is at least 200 mm and preferably at least 300 mm. Engine speed is preferably below 800 RPM, especially for four-stroke engines, and more preferably below 200 RPM for two-stroke engines, which indicates the designation of low-speed engines.

Large engines are classically configured as large diesel engines, which are operated with heavy fuel oil. The engine can be a diesel or a gas engine, a dual-fuel or a multi-fuel engine. Under the aspects of economic and efficient operation, compliance with exhaust-gas limit values, sustainability, reduction of CO₂- and NOx- emissions, and the availability of resources, alternatives to heavy fuel oil are now also being sought for large engines. In this respect, both liquid fuels, i.e. fuels that are introduced into the combustion chamber in the liquid state, and gaseous fuels, i.e. fuels that are introduced into the combustion chamber in the gaseous state, are used.

Examples of liquid fuels as known alternatives to heavy fuel oil are other heavy hydrocarbons, which are particularly left over as residues from oil refining; alcohols, in particular methanol or ethanol; ammonia; gasoline; diesel; or also emulsions or suspensions such as slurries. Biological fuels, such as oil made from algae or seaweed, HVO (hydro-treated vegetable oil), and FAME (fatty acid methyl ester) based fuels are also possible. For example, it is known to use emulsions known as MSAR (Multiphase Superfine Atomized Residue) as fuel. As gaseous fuels, natural gases such as LNG (liquefied natural gas), liquefied gases such as LPG (liquefied petroleum gas), natural gas (NG), petrol gas (PG), ethane, or hydrogen are known. Further possible fuels comprise LBG (liquefied biogas), hydrogen, ammonia, and synthetic fuels from CO₂ (e.g., made by Power-To-Gas or Power-To-Liquid processes).

In particular, large engines are also known, which can be operated with at least two or even more different fuels, whereby the engine is operated either with one fuel or with the other fuel depending on the operating situation or environment. It is also known to concurrently inject the two different fuels into the combustion chamber of the cylinder.

For this, fuel supply systems comprising fuel injectors are used. However, prior art fuel supply systems can suffer from leaked fuel.

Large engines that can be operated with two or more different fuels are referred to as dual-fuel or multi-fuel large engines. Depending on the fuels, these engines may be operated in a liquid mode, in which a liquid fuel is introduced into the cylinder for combustion, and/or in a gas mode, in which a gas is introduced into the cylinder as fuel.

Large engines, which can be operated with at least two or even more different liquid or gaseous fuels, are often operated in different operating modes depending on the fuel currently in use. In the operating mode often referred to as diesel operation, the combustion of the fuel generally takes place according to the principle of compression ignition or self-ignition of the fuel. In the mode often referred to as Otto operation, combustion takes place by induced ignition. This induced ignition can take place, for example, by an electrical spark (e.g., with a spark plug) or by the self-ignition of a small injected amount of fuel (pilot fuel), which then causes the induced ignition of another fuel. The small amount of fuel intended for self-ignition is directly inserted into the combustion chamber or injected into a pre-chamber connected to the combustion chamber. Forced ignition can thus be achieved by use of a pre-chamber, a spark plug, and/or a pilot fuel. The process of induced ignition by self-ignition of a small amount of a liquid or another self-igniting fuel is sometimes referred to as pilot injection.

Furthermore, mixed forms using both Otto and diesel operation are also known.

In particular, in view of attempts to reduce greenhouse gas emissions, the reduction of CO₂ production, and sustainability goals, a reduction in the use of fossil fuels is strived for. Thus, alternatives are investigated to at least reduce or even completely avoid the use of fossil fuels in large engines.

Alternatives to fossil fuel are, for example, methanol or ammonia. However, there is the risk that these fuels escape from the engine, e.g., as vapor, into the space which is accessible to engine maintenance or operating personnel. This constitutes a health hazard requiring comprehensive mitigation measures. The escaping of gaseous fuel into the atmosphere are usually referred to as fuel slip or fugitive emissions. When methanol or ammonia is used as a fuel in a large engine, most of the methanol or ammonia is consumed in the combustion process. However, some of the fuel remains unburned and may escape into the atmosphere, e.g., by passing through the exhaust gas system of the large engine (fuel slip). All upstream losses are summarized as fugitive emissions. Methanol or ammonia is hazardous for the environment as well as for humans and animals. Therefore, great efforts are made to reduce the fuel slip and fugitive emissions occurring in large engines, such as those used for ship propulsion.

A first aspect of the invention concerns a fuel supply system for supplying a fuel, in particular methanol, ammonia, LNG, or LPG, to an internal combustion engine. The internal combustion engine in particular is a large engine having at least one cylinder with a bore having a diameter of at least 200 mm.

The fuel supply system comprises a fuel pipe, in particular a double-walled fuel pipe, for guiding the fuel to at least one fuel injector of the large combustion engine. The fuel pipe comprises a fuel line and a fuel pipe space at least partly surrounding at least a part of the fuel line.

Fuel may be guided through the fuel line to a fuel injector.

The fuel pipe comprises an outside fuel pipe section arrangeable outside of an engine room hosting the at least one cylinder and an inside fuel pipe section arrangeable inside of the engine room.

When mounted, a major part of the combustion engine is arranged within the engine room, which is a part of a ship or building in which the cylinder is housed.

When the fuel supply system is mounted, the outside fuel pipe section is outside of the engine room and the inside fuel pipe section is inside of the engine room. The inside fuel pipe section comprises a fuel pipe space at least partly surrounding the fuel line.

The outside fuel pipe section may be double-walled and may comprise a fuel pipe space at least partly surrounding the fuel line, but does not need to be double-walled.

Typically, a fuel source for feeding the fuel line is arranged outside the engine room, whereas, when mounted, the fuel injector is inside the engine room.

The fuel supply system also comprises a return pipe, in particular a double-walled return pipe, comprising a return line and a return pipe space at least partly surrounding at least a part of the return line. The return pipe comprises an outside return pipe section arrangeable outside of the engine room and an inside return pipe section arrangeable inside of the engine room. The inside return pipe section comprises a return pipe space at least partly surrounding the return line.

The outside return pipe section may be double-walled and may comprise a fuel pipe space at least partly surrounding the return line, but does not need to be double-walled.

When the fuel supply system is mounted, the outside return pipe section is outside of the engine room and the inside return pipe section is inside of the engine room.

The return pipe may guide excess fuel or purged fuel from the fuel injector to an excess fuel treatment system or to a purge tank and/or a catch tank, which typically are arranged outside the engine room.

The fuel pipe space may be fluidly connected or connectable to the return pipe space.

If the fuel pipe space is purged with compressed air or an inert gas such as nitrogen, the fluid may be extracted through the return pipe space.

Preferably, the fuel pipe space of the inside fuel pipe section is fluidly connected or connectable to the inside return pipe section. When mounted, at least this first fluid connection may be arranged inside the engine room. The first fluid connection is, e.g., achievable via direct or indirect conduits between the fuel pipe space and the return pipe space, e.g., inside the engine, via the injector, etc.

The fuel supply system comprises at least one extraction line which is fluidly connected or connectable to the fuel pipe space, in particular of the inside fuel pipe section, and/or to the return pipe space, in particular of the inside return pipe section.

The extraction line is for extracting fuel that has leaked into the fuel pipe space and/or into the return pipe space. A leakage is more probable within the engine room and/or close to the engine, which typically is exposed to stronger vibrations than the room outside the engine room.

As the extraction line is connected or connectable to the fuel pipe space and/or the return pipe space, the leaked fuel may only take a short path to the extraction line and travels only a short distance. Hence, only a small suction power is required for extracting the leaked fuel.

The fuel pipe space may be an annular fuel pipe space surrounding the fuel line. The return pipe space may be an annular return pipe space surrounding the return line. Annular spaces are typical for a secondary contained piping system, wherein a containment pipe is encased in an outer carrier pipe with an annulus or interstitial space between the two diameters.

Alternatively, the fuel pipe space and/or the return pipe space may have, e.g., an angular or other cross-sectional shape.

The fuel pipe may have a fuel pipe partition to sealingly separate a first fuel pipe space from a second fuel pipe space, wherein the the first fuel pipe space is arranged closer to the fuel injector than the second fuel pipe space in a flow direction of fuel.

In particular, the fuel pipe may have a fuel pipe partition to sealingly separate the fuel pipe space of the inside fuel pipe section from the fuel pipe space of the outside fuel pipe section.

Alternatively or additionally, the return pipe may have a return pipe partition to sealingly separate a first return pipe space from a second return pipe space, wherein the first return pipe space is arranged closer to the injector than the second return pipe space in a flow direction.

In particular, the return pipe may have a return pipe partition to sealingly separate the return pipe space of the inside return pipe section from the return pipe space of the outside return pipe section.

Within this context "sealingly separating" means that the fuel pipe partition and the return pipe partition hermetically seal off a respective first pipe space from a respective second pipe space. No fluid connection is provided between the respective first pipe space and the respective second pipe space.

When mounted, the fuel pipe partition and/or the return pipe partition may be positioned in the engine room, having walls, which separate the engine room from the environment or area outside of the engine room. Alternatively, the fuel pipe partition and the return pipe partition may be positioned within the engine room or outside the engine room, preferably at a distance to the walls of the engine room smaller than 20, preferably 10, times an outer diameter of the double-walled fuel pipe.

The fuel pipe partition and/or the return pipe partition preferably may be positioned close (i.e. smaller than 20, preferably 10, times an outer diameter, see above) to a yard connection, which is the mounting connection of the pipes belonging to the engine in the engine room. The fuel pipe partition and/or the return pipe partition preferably are arranged on the engine side of the yard connection. Thus, in this case, the fuel pipe partition and/or the return pipe partition are mounted "on engine" and belong to the engine which is mounted in a building or on a ship. By means of the fuel pipe partition, the first fuel pipe space is decoupled from the second fuel pipe space. Analogously, by way of the return pipe partition the first return pipe space is decoupled from the second return pipe space.

In particular, by way of the fuel pipe partition, the fuel pipe space of the inside fuel pipe section may be decoupled from the fuel pipe space of the outside fuel pipe section. Analogously, by way of the return pipe partition the return pipe space of the inside return pipe section may be decoupled from the return pipe space of the outside return pipe section.

The first fuel pipe space and the first return pipe space, in particular the fuel pipe space of the inside fuel pipe section and the return pipe space of the inside return pipe section, may form a relatively small pipe system from which leaked fuel may be extracted more easily.

It should be noted that the fuel pipe and/or the return pipe may comprise one partition wall that can (see above) or cannot be arranged at the wall of the engine room, or a plurality of partition walls. Thus, two or more sections can be created in the fuel pipe spaces and/or the return pipe spaces. The walls of these sections can (see above) but need not coincide with the engine room wall and/or the yard connection.

The fuel supply system may comprise an inside space bypass fluidly connecting the first fuel pipe space, in particular the fuel pipe space of the inside fuel pipe section, with the first return pipe space, in particular the return pipe space of the inside return pipe section.

Hence, the first fuel pipe space, the first return pipe space and the inside space bypass may form an, in particular closed, first, in particular inside, pipe system within the engine room, from which leaked fuel may be extracted by a single extraction line. This helps to simplify the pipe system.

In particular, the fuel pipe space of the inside fuel pipe section, the return pipe space of the inside return pipe section and the inside space bypass may form an inside pipe system within the engine room, from which leaked fuel may be extracted by a single extraction line.

The inside space bypass may form a second fluid connection, in addition to the first fluid connection (via other conduits of the engine, see above) and separate therefrom, between the first fuel pipe space, in particular the fuel pipe space of the inside fuel pipe section, and the first return pipe space, in particular the return pipe space of the inside return pipe section, such that together with the first fluid connection, as described above, a closed inside pipe system is formed.

Especially when a fuel pipe partition and a return pipe partition are arranged as described above, the inside pipe system is a small pipe system, which has only a small volume and which is decoupled from the second annular spaces, in particular annular spaces outside the engine room. Hence, only a small suction power is needed for extracting any leaked fuel. The suction power may be provided by a low-pressure source, such as a vacuum ejector. Unlike a blower, there is no heat dissipation from an ejector, hence it does not require cooling and can be encapsulated by a protection wall. Thus, the double wall protection concept can be preserved even surrounding the ejector.

A vacuum ejector does not have any moveable parts and hence needs less maintenance. It can be arranged anywhere in the engine room, for example also in an exhaust manifold. The low-pressure can be adapted in a single-stage vacuum ejector or by a multi-stage vacuum ejector.

The fuel supply system may comprise an outside space bypass connecting the second fuel pipe space, in particular the fuel pipe space of the outside fuel pipe section, with the second return pipe space, in particular the return pipe space of the outside return pipe section.

Hence, the second fuel pipe space, the second return pipe space and the outside space bypass may form a second pipe system, in particular arranged at least partly outside the engine room, which typically has a larger volume than the first pipe system within the engine room as described above.

In particular, the fuel pipe space of the outside fuel pipe section, the return pipe space of the outside return pipe section and the outside space bypass may form an outside pipe system arranged outside the engine room.

Further partitions and/or bypasses can be foreseen as disclosed above.

Leaked fuel may be extracted separately from the first, preferably inside, pipe system and the second, preferably outside, pipe system. The second pipe system and/or the first pipe system may be purged with compressed air or an inert gas such as nitrogen separately.

Preferably, the extraction line is completely arrangeable inside the engine room. The walls of the engine room containing the engine room provide for additional safety with respect to a leaked hazardous fuel.

The extraction line may merge into a leakage treatment system which can also be arranged in the engine room.

Alternatively, when mounted, only a part of the extraction line is arranged in the engine room. The extraction line may merge into a leakage treatment system or into an exhaust gas stream outside the engine room.

The extraction line may be connected or connectable to a low-pressure source, in particular comprising a vacuum ejector. Preferably, the low-pressure source is part of the fuel supply system and also arrangeable within the engine room.

Preferably, the vacuum ejector is designed for extracting leaked fuel from the volume of the first, in particular inside, pipe system.

The first fuel pipe space and/or the second fuel pipe space, in particular the fuel pipe space of the outside fuel pipe section, may be connected or connectable to a ventilation fluid supply and/or a fluid extraction system. Additionally or alternatively, the first return pipe space and/or the second return pipe space, in particular the return pipe space of the outside return pipe section, may be connected or connectable to a ventilation fluid supply and/or a fluid extraction system, in particular a ventilation and/or fluid suction system.

The ventilation fluid supply provides a purging fluid, whereas the fluid extraction system provides for removing the purging fluid out of the annular spaces.

Hence, the fuel pipe space and the return pipe space, in particular the outer pipe system may be flushed to purge any residuals of leaked fuel. The purged residuals may be guided to a leakage treatment system, e.g. arranged outside the engine room.

The fuel supply system further may comprise a leakage detector, in particular a gas sensor, for detecting a fuel leakage from the fuel line to the fuel pipe space and/or from the return line to the return pipe space.

In particular, the leakage detector is fluidly connectable or connected to the extraction line or even arranged in the extraction line.

Depending on the amount of leaked fuel, the suction power of the low-pressure source may be increased, or the engine may be stopped or switched to a different fuel operation.

The fuel supply system may comprise a fuel injection system having at least one fuel injector.

The fuel supply system may comprise a fuel source, such as, e.g. a fuel tank, and a pump.

The fuel supply system may comprise a leakage treatment system connected or connectable to the extraction line.

According to a further aspect of the invention, an internal combustion engine is disclosed having at least one cylinder with a bore having a diameter of at least 200 mm. In particular, the internal combustion engine is a longitudinally scavenged two-stroke large engine, comprises at least one cylinder having a combustion chamber, wherein a piston is arranged in the cylinder for a reciprocating movement between a top dead center position and a bottom dead center position. The internal combustion engine is at least partly arrangeable in an engine room of a building or a ship.

The internal combustion engine comprises a fuel supply system as described above with regard to the first aspect of the invention.

Each cylinder may comprise at least one exhaust gas outlet which outlets may be fluidly connected or connectable to an exhaust gas manifold.

Each cylinder comprises at least one fuel injector for injecting a fuel, in particular methanol, ammonia, LNG, or LPG.

Each cylinder may comprise a second fuel injector for injecting a second fuel into the combustion chamber, wherein the second fuel is different from the fuel. In particular, the second fuel is a diesel fuel for self-ignition and/or pilot ignition of the fuel in the combustion chamber.

The internal combustion engine may comprise a low-pressure source, in particular arrangeable in the engine room, wherein the extraction line is connected or connectable to the low-pressure source.

The low-pressure source may comprise at least one of the group consisting of a suction pump, a vacuum ejector, a (part of the) turbocharger, and a vacuum compressor. Preferably, the low-pressure source comprises a vacuum ejector, which does not require a specific cooling.

The internal combustion engine may be configured such that leaked fuel is guidable into an exhaust gas stream of the engine, in particular into a funnel. In particular, the extraction line may be directly fluidly connected or connectable to the funnel, such that the leaked fuel may be released to the environment without any treatment.

Alternatively or in addition, the internal combustion engine comprises a leakage treatment system, in particular arrangeable in the engine room. At least one of the fuel pipe space, the return pipe space, and the extraction line, is fluidly connected or connectable to the leakage treatment system. In particular, the first fuel pipe space, in particular the fuel pipe space of an inside fuel pipe section and/or the first return pipe space, in particular the return pipe space of an inside return pipe section, is fluidly connected or connectable to the leakage treatment system, such that leaked fuel may be guided into the leakage treatment system, in particular a fuel treatment system.

Typically, the internal combustion engine comprises an exhaust gas manifold. The leakage treatment system may be arranged within the exhaust gas manifold.

Alternatively, the leakage treatment system comprises or consists of the exhaust gas manifold.

Leaked fuel in the extraction line can be guided to the exhaust gas manifold.

Leaked ammonia may be used as a reducing agent, e.g. in the SCR of a dual fuel engine.

The internal combustion engine may comprise a turbocharger. The extraction line and potentially a low-pressure source may be arranged such that leaked fuel is guidable into a scavenge air inlet upstream of a compressor of the turbocharger. The leaked fuel may be guided into the cylinder together with the fresh air.

According to a further aspect of the invention, a propulsion system, in particular for a marine vessel, comprises an internal combustion engine as described above and an engine room for housing at least one cylinder of the internal combustion engine and at least partially the fuel supply system as described above.

According to yet another aspect of the invention, a marine vessel comprises such a propulsion system as described above and/or an internal combustion engine as described above and an engine room for housing at least one cylinder of the internal combustion engine and at least partially the fuel supply system as described above.

The marine vessel may comprise walls of an engine room including the engine room. A part of the fuel supply system is arranged in the engine room.

A further aspect of the invention concerns the use of a vacuum ejector for extracting leaked fuel, in particular methanol, ammonia, LNG, or LPG, in an internal combustion engine, preferably as described above.

Preferably, the vacuum ejector is used to extract leaked fuel out of a fuel pipe space, in particular out of a fuel pipe space of an inside fuel pipe section, and/or a return pipe space, in particular a return pipe space of an inside return pipe section of a fuel supply system, as described above.

Alternatively or in addition, the vacuum ejector is used to extract leaked fuel out of an injector or a pressure amplifier of the engine.

The use of the vacuum ejector for extracting fuel may also concern the extraction of leaked fuel out of an extraction line arranged in the fuel injector, for example surrounding and being in contact with a movable part of the injector, in particular of a purge valve and/or a pressure amplifier.

As explained above, the internal combustion engine may comprise a leakage treatment system, in particular a fuel treatment system.

The fuel treatment system may provide for the reducing of the ammonia content of leaked fuel, in particular leaked in a fuel supply system as described above.

In the fuel treatment system, the leaked fuel may be treated for further use and/or for storing and/or venting. For example, the fuel treatment system may comprise a cleaning stage to remove oil residuals.

The fuel treatment system may be fluidly connected or connectable to the fuel line. Thus, leaked fuel can be reused more easily.

Alternatively or in addition, the fuel treatment system may be fluidly connected or connectable to the exhaust gas manifold and/or to an exhaust gas outlet.

Alternatively or in addition, the fuel treatment system may be fluidly connected or connectable to the scavenge air inlet.

The fuel treatment system may comprise water and/or an acid for absorbing leaked fuel. The leaked fuel can be chemically bound.

The fuel treatment system may comprise a liquifying system, preferably comprising a cooling system for condensation of gaseous leaked fuel. The cooling system may comprise a direct contact condenser or an indirect heat exchanger. It may use the low temperature of liquid fuel, such as ammonia, in the fuel supply system. The cooling system may comprise a heat pump.

Alternatively or in addition, the liquifying system may comprise a compression liquefier.

Liquified leaked fuel may be redirected to and used in the fuel line and/or a reducing agent dosing system of an SCR reactor.

The fuel treatment system may comprise an incinerating system for burning the leaked fuel. The incineration system may comprise an ignition plug. The combustion products of the leaked fuel leaving the incinerating system may be discharged into the environment.

The fuel treatment system may comprise a catalyst, for example as described below.

The fuel treatment system may comprise a dilution gas inlet for providing gas, such as air or exhaust gas. The gas provides for diluting the leaked fuel and for supplying oxygen.

The dilution gas inlet may be fluidly connected or connectable to an exhaust gas manifold of the internal combustion engine.

Alternatively or in addition, the extraction line may be fluidly connected or connectable to the exhaust gas manifold.

The leaked fuel, in particular leaked ammonia fuel, from the extraction line or from the fuel treatment system, may be used as a reducing agent in an SCR reactor arranged downstream the exhaust gas manifold, in particular a high-pressure SCR reactor arranged upstream a turbine of a turbocharger.

The regular urea dosing of the SCR reactor unit may be controlled in such a way, e.g. by a control unit being part of a main engine control unit or being a separate control unit, that there is no extended ammonia slip. In other words, when leaked ammonia fuel is used as reducing agent, regular urea dosing is decreased which helps to save costs.

The fuel treatment system may comprise a leaked fuel inlet for receiving leaked fuel sucked off a fuel supply system of an ammonia-fueled engine.

Such leaked fuel can contain ammonia and a small amount of oil. However, the leaked fuel may have an ammonia content of more than 90 percent.

However, in order for the leaked fuel to be vented into the environment, the ammonia content must be less than, e.g. 10 ppm or less.

Ammonia may also leak from other parts of the combustion engine. Such ammonia can be fed to the fuel treatment system as well.

The fuel treatment system may comprise at least one ammonia slip catalyst, also called ammonia oxidation catalyst, configured to oxidize leaked ammonia and at least one metal-zeolite catalyst, arranged downstream the ammonia slip catalyst.

The gas hourly space velocities (GHSV) defined by the flowrate and the volume of a catalyst, of the at least one ammonia slip catalyst and the at least one metal-zeolite catalyst may be configured to practically remove the complete ammonia content or at least to substantially reduce the ammonia content of the leaked fuel at a given temperature and pressure.

In the ammonia slip catalyst, the ammonia is oxidized and nitrogen N₂, NOₓ, in particular NO and NO₂, as well as nitrous oxide N₂O are produced.

Nitrous oxide N₂O is involved in ozone depletion and has high global warming potential. Thus, nitrous oxide should not be released into the environment.

The ammonia slip catalyst may operate at a high temperature window, for example between 350°C and 500°C.

The metal-zeolite catalyst provides for reducing residuals of NOₓ as well as for reducing nitrous oxide, in particular at temperatures in a range from 500°C to 650°C. The oxidation heat produced in the ammonia slip catalyst may warm up the metal-zeolite catalyst, such that the metal-zeolite catalyst is at an appropriate temperature. Such a thermal coupling can help to reduce energy consumption.

It should be noted that the concept of the invention can be adapted to other fuels such as methanol as well by selecting appropriate catalysts.

The fuel treatment system may comprise a dilution gas inlet arranged upstream the ammonia slip catalyst for introducing a dilution gas, preferably exhaust gas.

Within this context, the meaning of the terms upstream/downstream refers to the flow direction of leaked fuel, for example from a fuel supply system towards a funnel.

Less than 1% of the exhaust gas of the combustion engine may be branched off to dilute the leaked ammonia.

The amount of dilution gas is advantageously controlled (e.g. depending on the amount of leaked ammonia) such that an outlet temperature after the last metal-zeolite catalyst is maintained within a predetermined range or value, e.g. below 550°C.

The leaked ammonia may also be diluted with air or another gas such as an inert gas.

The exhaust gas or the air may heat up the leaked fuel.

The exhaust gas or the air may be heated up by a heater, preferably an electrical heater, to bring the temperature of the flow of diluted leaked fuel to an appropriate temperature for the function of the ammonia slip catalyst, e.g. 400 or 450°C. The heater may be arranged in a dilution gas line upstream of the dilution gas inlet.

Preferably, the dilution gas inlet is configured to dilute the leaked ammonia by a factor in a range of 70-210.

The fuel treatment system may comprise more than one catalyst combination, each of which comprises at least one ammonia slip catalyst and at least one metal-zeolite catalyst, which may be passed successively, for stepwise reducing the ammonia content of the leaked fuel.

A stepwise reducing of ammonia may prevent overheating of the metal-zeolite catalyst as in each step only a part of the ammonia is oxidized and correspondingly a lower amount of oxidation heat is produced.

Alternatively or additionally, the fuel treatment system may comprise a recirculation line for repeatedly passing a catalyst combination comprising one ammonia slip catalyst and one metal-zeolite catalyst. This may also provide for a stepwise reduction of the ammonia content.

When the ammonia content is reduced in a plurality of steps, smaller catalysts may be used, as compared to a substantial reduction of the ammonia content in one step.

Preferably, at least one ammonia slip catalyst and at least one metal-zeolite catalyst, preferably a catalyst combination of one ammonia slip catalyst and one metal-zeolite catalyst, are thermally coupled, such that oxidation heat produced in the ammonia slip catalyst warms up the metal-zeolite catalyst.

The ammonia slip catalyst and the metal-zeolite catalyst may be placed in contact with each other, preferably forming a catalyst combination.

Adjacent catalyst combinations may be placed in contact to each other.

The ammonia slip catalyst and the metal-zeolite catalyst may be arranged in a common housing.

The dilution gas inlet may be connected or connectable to the exhaust line, preferably to an exhaust gas manifold, more preferably upstream a turbine of a turbocharger.

The metal-zeolite catalyst may be a Fe-zeolite-catalyst and/or a Cu-zeolite-catalyst, in particular a Fe-beta-zeolite-catalyst.

The leaked ammonia inlet of the fuel treatment system may be fluidly connected or connectable to a extraction line of a fuel supply system as described above.

The fuel treatment system may comprise a housing, in particular encompassing the at least ammonia slip catalyst and the metal zeolite catalyst. The housing may be double walled.

The container may be arranged close to, on and/or within an exhaust gas pipe, in particular an exhaust gas manifold. This has the benefit that the housing is preheated from the exhaust gas and that a second enclosure may be omitted.

The leaked fuel inlet may also be arranged inside the exhaust gas pipe.

According to a further aspect of the invention, a method for operating an internal combustion engine as described above comprises a step of creating, in particular by means of a vacuum ejector, an underpressure below atmospheric pressure, preferable a pressure lower than 0.8 bar absolute (corresponding to -0.2 bar gauge), in at least one of the fuel pipe space , the return pipe space, and the extraction line, in particular in at least one of the fuel pipe space of the inside fuel pipe section, the fuel pipe space of the outside fuel pipe section, the return pipe space of the inside return pipe section, the return pipe space of the outside return pipe section, and the extraction line.

The method further comprises the step of guiding, preferably by means of the underpressure, leaked fuel out of the fuel pipe space, in particular out of the fuel pipe space of the inside fuel pipe section, and/or the step of guiding, preferably by means of the underpressure, leaked fuel out of the return pipe space, in particular out of the return pipe space of the inside return pipe section.

Preferably the leaked fuel is guided to a leakage treatment system, preferably a fuel treatment system as described above.

The method may comprise at least one of the following steps:
The leaked fuel may be guided into an exhaust gas stream of the internal combustion engine. The leaked fuel may in particular be guided into an exhaust gas manifold and/or into a funnel.

The leaked fuel may be guided into a scavenge air inlet upstream of a compressor of a turbocharger.

The leaked fuel may be guided into a leakage treatment system.

### Brief Description of the Drawings

The invention will be better understood and objects other than those set forth above will become apparent when consideration is given to the following detailed description thereof. Such description makes reference to the annexed drawings, wherein:
- Figure 1: shows a schematic representation of an embodiment of an internal combustion engine;
- Figure 2: shows a schematic representation of a first embodiment of a fuel supply system;
- Figure 3: shows a schematic representation of a second embodiment of a fuel supply system;
- Figure 4: shows a schematic representation of a third embodiment of a fuel supply system;
- Figure 5: shows a schematic representation of a fourth embodiment of a fuel supply system;
- Figure 6: shows a schematic representation of an embodiment of a large combustion engine comprising a fuel treatment system;
- Figure 7: shows a vacuum ejector as a low-pressure source to generate a low-pressure in the extraction line.

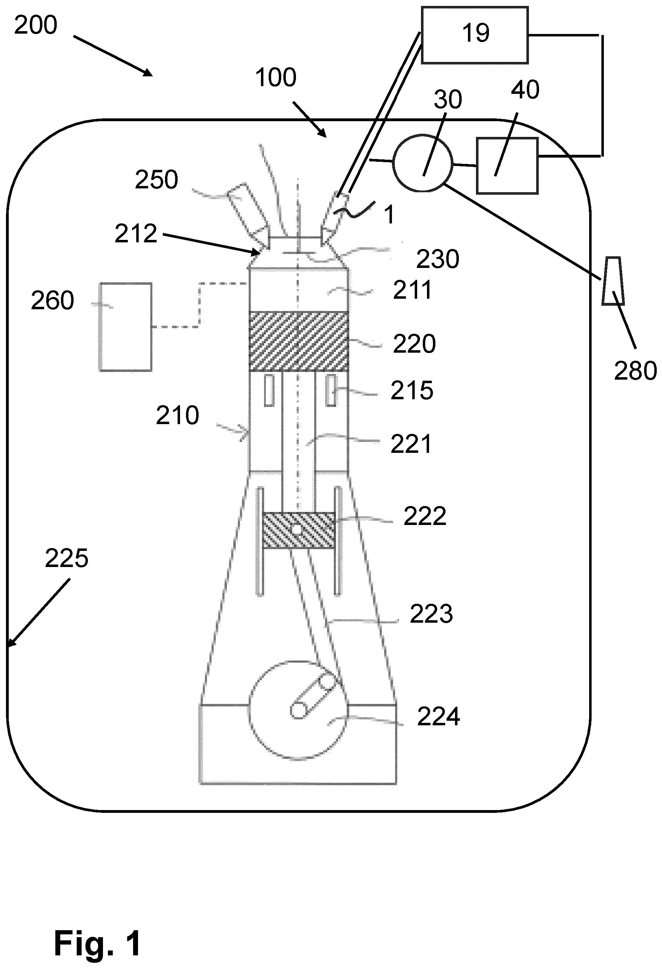

In figure 1, only one of the cylinders 210 of the internal combustion engine, in this case a large engine 200 is shown.

Usually, the large engine 200 comprises a plurality of cylinders 210, for example at least four and up to twelve cylinders 210 or even more. The term "large combustion engine" refers to internal combustion engines that are typically used as drive units for ships or in stationary operations, such as driving large generators for generating electrical energy. Typically, the cylinders 210 of a large engine 200 each have an inner diameter (bore) of at least about 200 mm. Large engines 200 are known in various configurations, for example as two-stroke engines or four-stroke engines.

In the following description, reference is made by way of example to a large engine 200 configured as a longitudinally scavenged two-stroke large engine having a plurality of cylinders 210. Each cylinder 210 has a combustion chamber 211. Furthermore, in each cylinder 210, a piston 220 is arranged for reciprocating movement between a top dead center and a bottom dead center.

The term "longitudinally scavenged" means that the scavenging or charging air is introduced into the cylinder 210 in the area of the lower end, and an exhaust valve 230 is arranged in or at the cylinder cover 212 located at the upper end of the cylinder 210.

In particular, reference is made to a large longitudinally scavenged two-stroke engine that can be operated with different fuels, namely with a first fuel and with a second fuel.

According to a preferred configuration, the large engine 200 can be operated with methanol or ammonia as a first fuel and with a self-igniting and liquid second fuel. For this, the large engine 200 comprises a first fuel supply system 100 and a second fuel supply system 250.

Each cylinder 210 comprises at least one, but preferably a plurality of, first fuel injector systems 100 for injecting the first fuel, as well as at least one, but preferably a plurality of, second fuel injectors 250 for injecting the second fuel.

In each cylinder 210, the piston 220 is connected in a manner known per se to a crosshead 222 via a piston rod 221. The cross-head 222 is connected to a crankshaft 224 via a push rod or connecting rod 223, so that the movement of the piston 220 is transmitted via the piston rod 221, the crosshead 222, and the connecting rod 223 to the crankshaft 224 to rotate it. The upper side of the piston 220, together with the cylinder cover 212, delimits the combustion chamber 211 into which the first fuel and/or the second fuel is introduced.

In the embodiment of a longitudinally scavenged two-stroke large diesel engine 200, scavenging air slots 215 are usually provided in the lower region of each cylinder 210 or cylinder liner. These slots are periodically closed and opened by the movement of the piston 220 in the cylinder 210, allowing the scavenging air provided by the turbocharger under charging pressure to flow into the cylinder 210 through the scavenging air slots 215 when they are open. In the cylinder cover 212, the usually centrally arranged exhaust valve 230 is provided, through which the exhaust gases can be discharged from the cylinder 210 into the exhaust system after the combustion process.

The large engine 200 is mostly arranged in an engine room 226 with walls 225 encompassing an engine room 226.

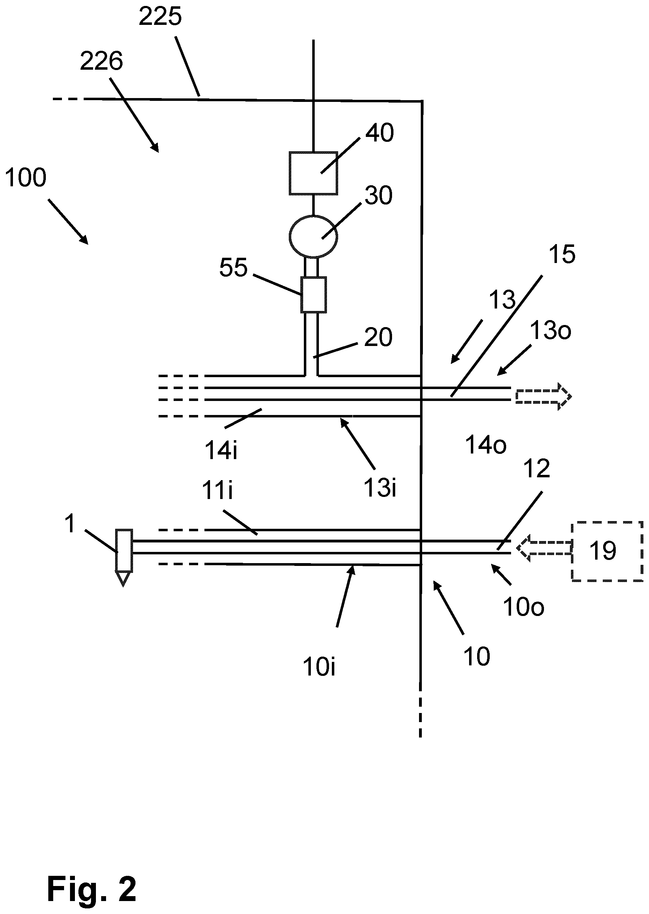

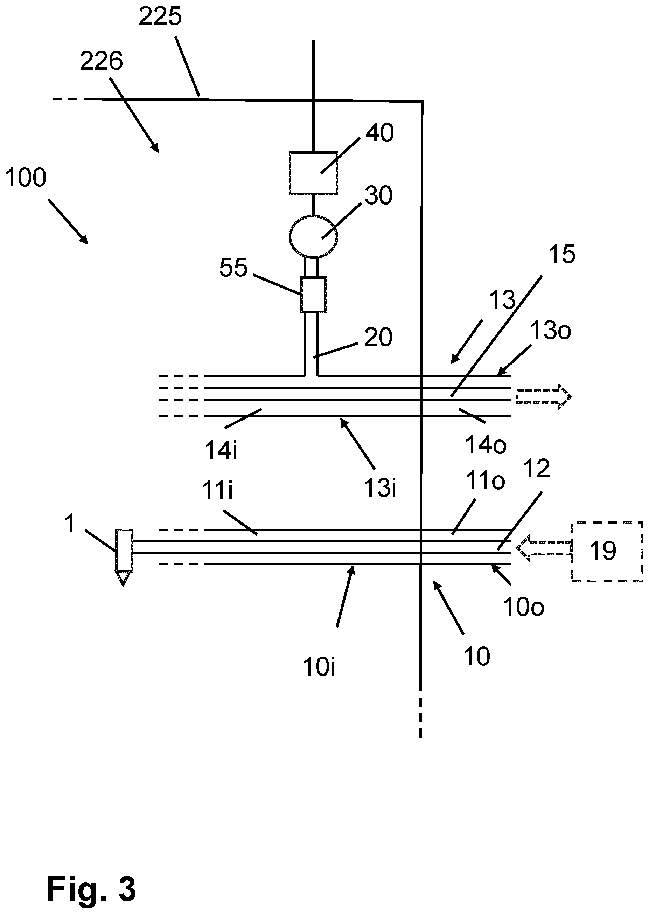

By means of the low-pressure source 30, leaked fuel can be sucked out of a extraction line 20 (see figures 2 and 3) of the first fuel supply system 100. The leaked fuel may be guided to a fuel treatment system 40, where the leaked fuel may be liquified and subsequently be guided to a fuel source 19 of a fuel supply system 100.

Alternatively, leaked fuel sucked from the annular fuel pipe space 11i (see figures 2 and 3) of the inside fuel pipe section 10i (see figures 2 and 3) and/or from the annular return pipe space 14i (see figures 2 and 3) of the inside return pipe section 13i (see figures 2 and 3) may be directly guided into the exhaust gas, eventually to an exhaust gas after treatment system (not shown in the figures), and to a funnel 280.

It is noted that the invention is not restricted to this specific type of a longitudinally scavenged two-stroke large engine 200, which can be operated with the first fuel and/or with the second fuel. The large engine can also be any other type of large engine. In particular, it is possible that the large engine is configured for the combustion of only one fuel.

Figure 2 shows a schematic representation of a first embodiment of a fuel supply system 100 mounted on a ship or in a building with walls 225 of an engine room 226 encompassing the engine room 226.

The fuel supply system 100 comprises a fuel pipe 10 for guiding fuel from a fuel source 19 to at least one fuel injector 1 of a large combustion engine 200 (see figure 1). The fuel pipe 10 comprises a fuel line 12 and a fuel pipe space 11i at least partly surrounding the fuel line 12 arranged inside the engine room 226. The fuel pipe 10 comprises an outside fuel pipe section 10o arranged outside of the engine room 226 and an inside fuel pipe section 10i arranged inside of the engine room 226.

The fuel supply system 100 comprises also a return pipe 13 comprising a return line 15 and a return pipe space 14i, which at least partly surrounds the return line 13 arranged inside the engine room 226. The return pipe 13 comprises an outside return pipe section 13o arranged outside of the engine room 226 and an inside return pipe section 13i arranged inside of the engine room 226.

The fuel pipe space 11i may be fluidly connected or connectable to the return pipe space 14i (the connection is not explicitly shown in the figure).

The fuel supply system 100 comprises an extraction line 20 which is fluidly connected or connectable to the fuel pipe space 11i or (not shown in the figure) to the return pipe space 14i of the inside return pipe section 13i.

The extraction line 20 is fluidly connected or connectable to a leakage detector 55, a low-pressure source 30 and a leakage treatment system 40.

Figure 3 shows a schematic representation of a second embodiment of a fuel supply system 100 mounted on a ship or in a building with walls 225 of an engine room 226 encompassing the engine room 226.

The fuel supply system 100 comprises a double-walled fuel pipe 10 for guiding fuel from a fuel source 19 to at least one fuel injector 1 of a large combustion engine 200 (see figure 1). The double-walled fuel pipe 10 comprises a fuel line 12 and a fuel pipe space 11i, 11o at least partly surrounding the fuel line 12. The double-walled fuel pipe 10 comprises an outside fuel pipe section 10o arranged outside of the engine room 226 and an inside fuel pipe section 10i arranged inside of the engine room 226.

The fuel supply system 100 comprises also a double-walled return pipe 13 comprising a return line 15 and a return pipe space 14i, 14o, which at least partly surrounds the return line 13. The double-walled return pipe 13 comprises an outside return pipe section 13o arranged outside of the engine room 226 and an inside return pipe section 13i arranged inside of the engine room 226.

The fuel pipe space 11i, 11o is fluidly connected or connectable to the return pipe space 14i, 14o (not explicitly shown in the figure).

The fuel supply system 100 comprises an extraction line 20 which is fluidly connected or connectable to the fuel pipe space 11i of the inside fuel pipe section 10i and to the return pipe space 14i of the inside return pipe section 13i.

The extraction line 20 is fluidly connected or connectable to a leakage detector 55, a low-pressure source 30 and a leakage treatment system 40.

Leaked fuel may be extracted inside the engine room, where the risk of a leakage is relatively higher than outside the engine room, e.g. due to vibrations.

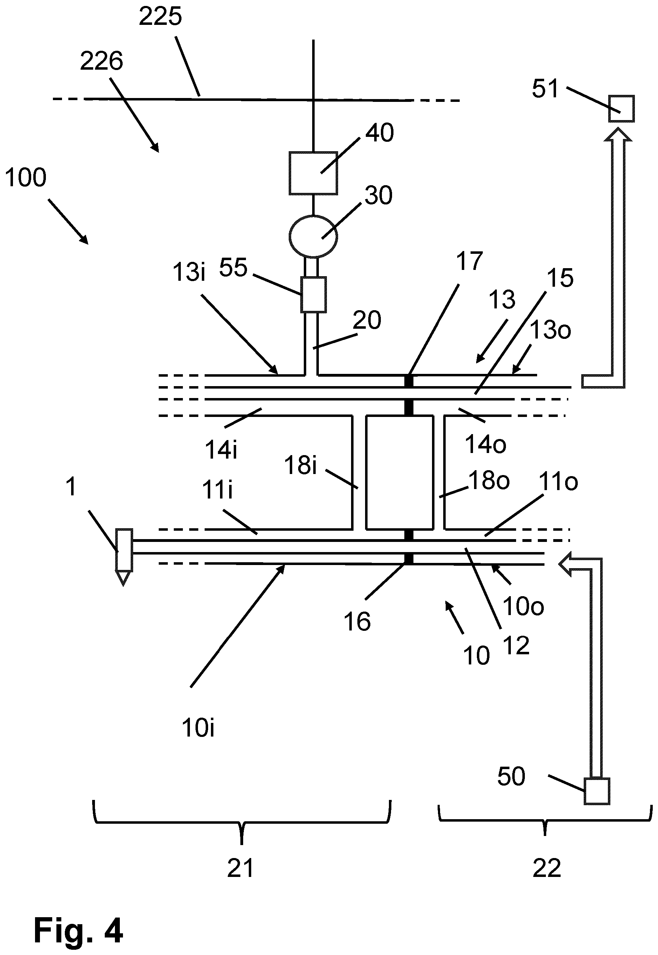

Figure 4 shows a schematic representation of a third embodiment of a fuel supply system 100 which is similar to the embodiment shown in figures 2 and 3.

In this embodiment, the fuel pipe 10 comprises a fuel pipe partition 16 to sealingly separate a first fuel pipe space 11i from a second fuel pipe space 11o. The first fuel pipe space 11i and at least a part of the second fuel pipe space 11o may be arranged within the engine room 226.

Furthermore, the return pipe 13 has a return pipe partition 17 to sealingly separate the first return pipe space 14i from the second return pipe space 14o. The first return pipe space 14i and at least a part of the second return pipe space 14o may be arranged within the engine room 226.

In this embodiment, the fuel supply system 100 comprises an inside space bypass 18i fluidly connecting the first fuel pipe space 11i with the first return pipe space 14i. The fuel supply system 100 also comprises an outside space bypass 18o connecting the second fuel pipe space 11o with the second return pipe space 140.

Thus, a first pipe system 21 comprising the inside space bypass 18i, the first fuel pipe space 11i and the first return pipe space 14i, is decoupled from a second pipe system 22 comprising the outside space bypass 18o, the second fuel pipe space 11o and the second return pipe space 14o.

The inside space bypass 18i, the fuel pipe partition 16 and/or the return pipe partition 17 are arranged within the engine room 226 and are preferably arranged on the engine side of a yard connection. Hence, the inside space bypass 18i, the fuel pipe partition 16 and/or the return pipe partition 17 belong to the engine which is mounted in a building or on a ship.

The outside pipe system 22 may be purged with, e.g. air or an inert gas from a compressed nitrogen supply system as ventilation fluid supply 50, which may be extracted by a fluid extraction system 51.

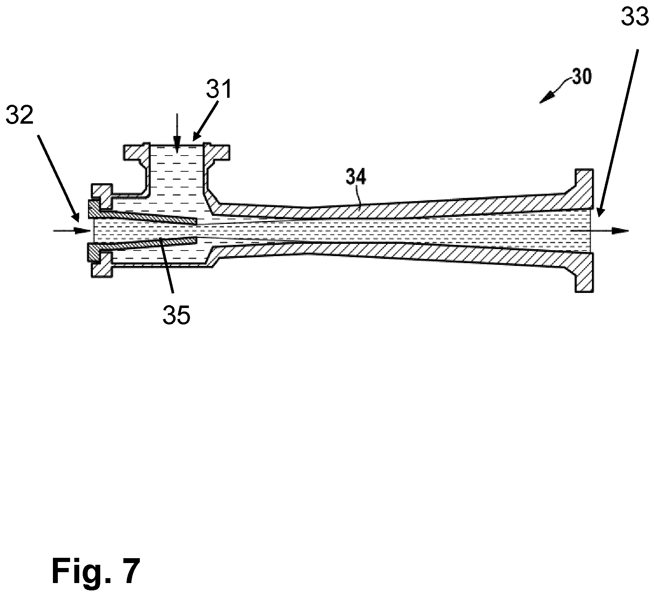

Leaked fuel may be extracted separately from the first pipe system 21, which has a relatively small volume. Thus, only a relatively small suction force is required which may be provided by the low-pressure source 30, for example by a vacuum ejector (see figure 7). Venting with air, nitrogen, or another inert gas is also possible alternatively or in addition (not shown).

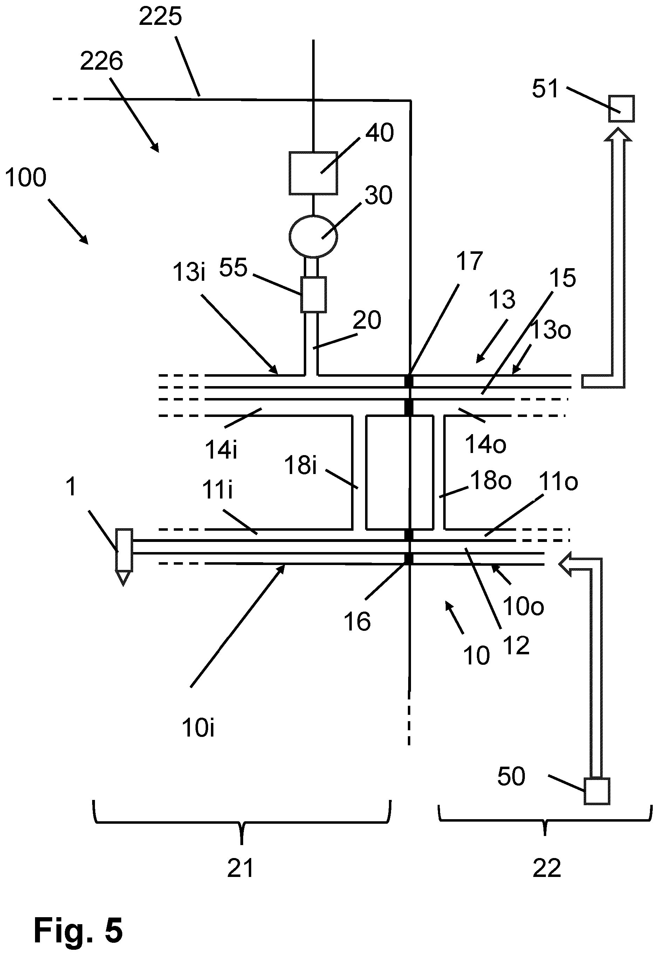

Figure 5 shows a schematic representation of a fourth embodiment of a fuel supply system 100 which is similar to the embodiment shown in figure 4.

In this embodiment the double-walled fuel pipe 10 comprises a fuel pipe partition 16 to sealingly separate a second fuel pipe space 11o, in this embodiment the fuel pipe space 11o of the outside fuel pipe section 10o, from first fuel pipe space, in this embodiment the fuel pipe space 11i of the inside fuel pipe section 10i.

Furthermore, the double-walled return pipe 13 has a return pipe partition 17 to sealingly separate the second return pipe space 14o, in this embodiment the return pipe space 14o of the outside return pipe section 13o, from the first return pipe space 14i, in this embodiment the return pipe space 14i of the inside return pipe section 13i.

In this embodiment, the fuel supply system 100 comprises an inside space bypass 18i, arranged within the engine room 226, fluidly connecting the fuel pipe space 11i of the inside fuel pipe section 10i with the return pipe space 14i of the inside return pipe section 13i. The fuel supply system 100 also comprises an outside space bypass 18o, arranged outside the engine room 226, connecting the fuel pipe space 11o of the outside fuel pipe section 10o with the return pipe space 14o of the outside return pipe section 13o.

Thus, an inside pipe system 21 comprising the inside space bypass 18i, the fuel pipe space 11i of the inside fuel pipe section 10i and the return pipe space 14i of the inside return pipe section 13i is decoupled from an outside pipe system 22 comprising the outside space bypass 18o, the fuel pipe space 11o of the outside fuel pipe section 10o and the return pipe space 14o of the outside return pipe section 13o.

The outside pipe system 22 may be vented with, e.g. air or an inert gas from a compressed nitrogen supply system as ventilation fluid supply 50, which may be extracted by a fluid extraction system 51.

Leaked fuel may be extracted separately from the inside pipe system 21, which has a relatively small volume. Thus, only a relatively small suction force is required which may be provided by the low-pressure source 30, for example by a vacuum ejector (see figure 7). Venting with air, nitrogen, or another inert gas is also possible alternatively or in addition (not shown).

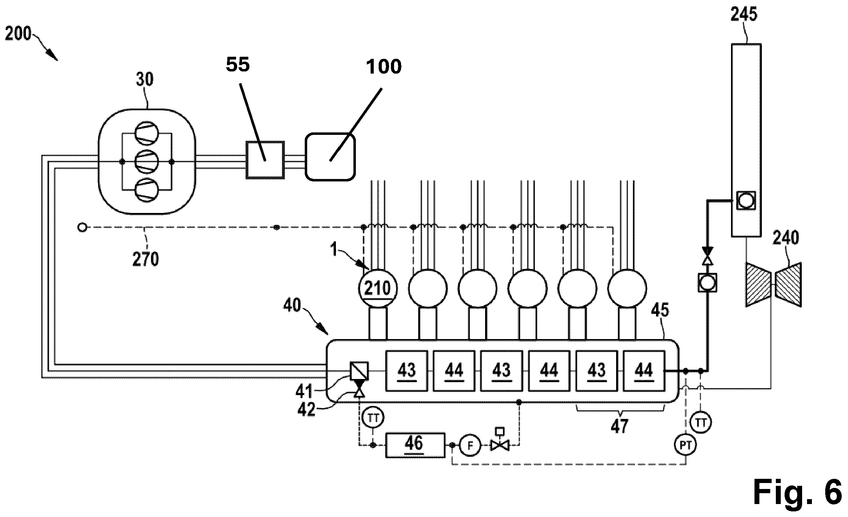

Figure 6 shows a schematic representation of an embodiment of a large combustion engine 200 comprising a leakage treatment system which is an ammonia treatment system 40.

In this case, the large combustion engine 200 comprises six cylinders 210 and respective ammonia fuel injectors 1.

Leaked ammonia is sucked off from the annular space of the fuel supply system 100 (see figures 2 and 3) by a low-pressure source 30 comprising a compressed-air driven vacuum ejector (see Fig. 5) and passed to the ammonia treatment system 40.

The ammonia treatment system 40 comprises a leaked ammonia inlet 41, a dilution gas inlet 42, ammonia slip catalysts 43, configured to oxidize leaked ammonia, and metal-zeolite catalysts 44.

Each metal-zeolite catalyst 44 is arranged downstream a respective ammonia slip catalyst 43.

In this example, the ammonia treatment system 40 comprises three catalyst combinations 47 arranged in series, each comprising one ammonia slip catalyst 43 and one metal-zeolite catalyst 44.

The ammonia treatment system 40 may be arranged within an exhaust gas manifold 45 of the large engine 200. In case a compressed-air driven vacuum ejector (see Fig. 5) is used as a low-pressure source 30, the low-pressure source 30 may alternatively be arranged within or in vicinity of the exhaust gas manifold 45, as the vacuum ejector 30 does not need any cooling.

Exhaust gas is branched off the exhaust gas manifold 45, is passed over a heater 46 and guided to the dilution gas inlet 42 to dilute the leaked ammonia.

Within the ammonia treatment system 40, the ammonia content is reduced, such that the resulting gas may be merged with the exhaust gas, in this case downstream the turbocharger 240, for example in a low-pressure exhaust gas treatment device 245.

Alternatively, the resulting gas may be redirected into the exhaust gas manifold 45 by a return line (not shown in the figures).

In such a case, the branched off exhaust gas from the exhaust gas manifold 45 is pressurized by a blower before being passed over the heater 46 and being guided to the dilution gas inlet 42.

The leaked ammonia may be pressurized as well to facilitate mixing with the exhaust gas.

Energy that is added to the mixture may thus advantageously be kept in the system and at least in part be reused in the turbocharger.

The large combustion engine 200 may also comprise a purge system 270. The purge system 270 may provide for purging the fuel injectors 1 (see figure 1).

The purge system 270 may comprise a high-pressure source (not shown in the figure). Nitrogen may be used as a purging gas.

The same leakage treatment system 40 may also be used for treating leaked fuel sucked out of the fuel injectors 1 (see figure 1).

Figure 7 shows a vacuum ejector as a low-pressure source 30 to generate a low-pressure in the extraction line (see figure 2). The low-pressure source 30 has a first inlet 31 for the leaked ammonia comprising fuel from the extraction line, for which a low pressure is to be created. The first inlet 31 at least partially encircles the second inlet 32. Furthermore, the outlet 33 comprises a diffuser 34. The second inlet 32 for compressed air comprises a nozzle 35 which accelerates the compressed air. The outlet 33 of the vacuum ejector combines the leaked fuel from the first inlet 31 and the accelerated compressed air from the second inlet 32 such that in combination with the diffuser 34 a low-pressure is generated in the extraction line connected to the first inlet 31. Unlike a blower, there is no overpressure downstream of the vacuum ejector 30, so no double-walled pipe is necessary.

Any embodiments described with respect to the devices shall similarly pertain to the methods. Synergetic effects may arise from different combinations of the embodiments although they might not be described in detail.

While there are shown and described presently preferred embodiments of the invention, it is to be distinctly understood that the invention is not limited thereto but may be otherwise variously embodied and practiced within the scope of the following claims.

The invention is further described by the following aspects:
I. A fuel supply system (100) for supplying a fuel, in particular methanol, ammonia, LNG, or LPG, to an internal combustion engine (200), in particular having at least one cylinder (210) with a bore having a diameter of at least 200 mm, the fuel supply system (100) comprising
   - a double-walled fuel pipe (10) for guiding the fuel to at least one fuel injector (1) of the large combustion engine (200), the double-walled fuel pipe (10) comprising a fuel line (12) and a fuel pipe space (11i, 11o) at least partly surrounding the fuel line (12),
      wherein the double-walled fuel pipe (10) comprises an outside fuel pipe section (10o) arrangeable outside of an engine room (226) hosting the at least one cylinder (210) and an inside fuel pipe section (10i) arrangeable inside of the engine room (226),
   - a double-walled return pipe (13) comprising a return line (15) and a return pipe space (14i, 14o) at least partly surrounding the return line (13), wherein the double-walled return pipe (13) comprises an outside return pipe section (13o) arrangeable outside of the engine room (226) and an inside return pipe section (13i) arrangeable inside of the engine room (226),
      wherein
   - the fuel pipe space (11i, 11o) is fluidly connected or connectable to the return pipe space (14i, 14o), and
   - the fuel supply system (100) comprises a leakage line (20) which is fluidly connected or connectable to the fuel pipe space (11i) of the inside fuel pipe section (10i) and/or to the return pipe space (14i) of the inside return pipe section (13i).
II. The fuel supply system of aspect I, wherein the fuel pipe space (11i, 11o) is an annular fuel pipe space (11i, 11o) surrounding the fuel line (12) and/or wherein the return pipe space (14i, 14o) is an annular return pipe space (14i, 14o) surrounding the return line (13).
III. The fuel supply system of any one of the aspects I to II, wherein at least one of
   - the double-walled fuel pipe (10) has a fuel pipe partition (16) to sealingly separate the fuel pipe space (11o) of the outside fuel pipe section (10o) from the fuel pipe space (11i) of the inside fuel pipe section (10i); and
   - the double-walled return pipe (13) has a return pipe partition (17) to sealingly separate the return pipe space (14o) of the outside return pipe section (13o) from the return pipe space (14i) of the inside return pipe section (13i).
IV. The fuel supply system of aspect III, wherein the fuel supply system (100) comprises an inside space bypass (18i) fluidly connecting the fuel pipe space (11i) of the inside fuel pipe section (10i) with the return pipe space (14i) of the inside return pipe section (13i).
V. The fuel supply system of any one of the aspects III to IV, wherein the fuel supply system (100) comprises an outside space bypass (18o) connecting the fuel pipe space (11o) of the outside fuel pipe section (10o) with the return pipe space (14o) of the outside return pipe section (13o).
VI. The fuel supply system of any one of the preceding aspects, wherein the leakage line (20) is completely arrangeable inside the engine room (226).
VII. The fuel supply system of any one of the preceding aspects, wherein the leakage line (20) is connected or connectable to a low-pressure source (30), in particular comprising a vacuum ejector.
VIII. The fuel supply system of any one of the preceding aspects, wherein the at least one of
   - the fuel pipe space (11o) of the outside fuel pipe section (10o) is connected or connectable to a vent fluid supply (50), and
   - the return pipe space (14o) of the outside return pipe section (13o) is connected or connectable to a ventilation and/or fluid suction system (51).
IX. The fuel supply system of any one of the preceding aspects, further comprising a leakage detector (55), in particular a gas sensor, for detecting a fuel leakage from the fuel line (12) to the fuel pipe space (11i, 11o) and/or from the return line (15) to the return pipe space (14i, 14o),
   and in particular wherein the leakage detector (55) is fluidly connectable or connected to the leakage line (20).
X. An internal combustion engine having at least one cylinder with a bore having a diameter of at least 200 mm, arrangeable in an engine room (226) and comprising a fuel supply system (100) of any one of the preceding aspects.
XI. The internal combustion engine of aspect X, comprising a low-pressure source (30), in particular arrangeable in the engine room (226), wherein the leakage line (20) is connected or connectable to the low-pressure source (30).
XII. The internal combustion engine of aspect XI, wherein the low-pressure source (30) comprises at least one of the group consisting of a suction pump, a vacuum ejector, a turbocharger, and a vacuum compressor.
XIII. The internal combustion engine of any one of the aspects X to XII, comprising a leakage treatment system (40), in particular arrangeable in the engine room (226), and wherein at least one of the fuel pipe space (11i, 11o), the return pipe space (14i, 14o), and the leakage line (20), is fluidly connected or connectable to the leakage treatment system (40).
XIV. The internal combustion engine of aspect XIII, further comprising an exhaust gas manifold (45), wherein the leakage treatment system (40) is arranged within the exhaust gas manifold (45) or wherein the leakage treatment system (45) comprises or consists of the exhaust gas manifold (45).
XV. The internal combustion engine of any one of the aspects X to XIV comprising a turbocharger, wherein leaked fuel is guidable into a scavenge air inlet upstream of a compressor of the turbocharger.
XVI. A propulsion system, in particular for a marine vessel, comprising an internal combustion engine of any one of the aspects X to XV and an engine room (226) for housing at least one cylinder of the internal combustion engine and for at least partially housing the fuel supply system of any one of the aspects I to IX.
XVII. A marine vessel, comprising a propulsion system of aspect XVI and/or an internal combustion engine of any one of the aspects X to XV, and an engine room (226) for housing at least one cylinder of the internal combustion engine and for at least partially housing the fuel supply system of any one of the aspects I to IX.
XVIII. Use of a vacuum ejector for extracting leaked fuel, in particular methanol, ammonia, LNG, or LPG, in an internal combustion engine, preferably of any one of the aspects X to XV, preferably out of a fuel pipe space (11i) of an inside fuel pipe section (10i) and/or a return pipe space (14i) of an inside return pipe section (13i) of a fuel supply system of any one of the aspects I to IX.
XIX. A method for operating an internal combustion engine of any one of the aspects X to XV, the method comprising a step of
   - creating, in particular by means of a vacuum ejector, a pressure below atmospheric pressure, preferable a pressure lower than 0.8 bar, in at least one of the fuel pipe space (11i) of the inside fuel pipe section (10i), the fuel pipe space (11o) of the outside fuel pipe section (11o), the return pipe space (14i) of the inside return pipe section (13i), the return pipe space (14o) of the outside return pipe section (13o), and the leakage line (20),
      and at least one step of
   - guiding leaked fuel out of the fuel pipe space (11i, 11o), in particular out of the fuel pipe space (11i) of the inside fuel pipe section (10i),
      and
   - guiding leaked fuel out of the return pipe space (14i, 14o), in particular out of the return pipe space (14i) of the inside return pipe section (13i).
XX. The method of aspect IXX comprising a step of
   - guiding the leaked fuel into an exhaust gas stream of the internal combustion engine, in particular into an exhaust gas manifold and/or into a funnel;
      and/or
   - guiding the leaked fuel into a scavenge air inlet upstream of a compressor of a turbocharger (240);
      and/or
   - guiding the leaked fuel into a leakage treatment system (40).

## Claims

1. A fuel supply system (100) for supplying a fuel, in particular methanol, ammonia, LNG, or LPG, to an internal combustion engine (200), in particular having at least one cylinder (210) with a bore having a diameter of at least 200 mm, the fuel supply system (100) comprising
- a fuel pipe (10) for guiding the fuel to at least one fuel injector (1) of the large combustion engine (200), the fuel pipe (10) comprising a fuel line (12),
wherein the fuel pipe (10) comprises an outside fuel pipe section (10o) arrangeable outside of an engine room (226) hosting the at least one cylinder (210) and
an inside fuel pipe section (10i) arrangeable inside of the engine room (226) and comprising a fuel pipe space (11i) at least partly surrounding the fuel line (12),
- a return pipe (13) comprising a return line (15),
wherein the return pipe (13) comprises an outside return pipe section (13o) arrangeable outside of the engine room (226) and
an inside return pipe section (13i) arrangeable inside of the engine room (226) and comprising a return pipe space (14i) at least partly surrounding the return line (13),
wherein
- the fuel supply system (100) comprises an extraction line (20) which is fluidly connected or connectable to the fuel pipe space (11i) and/or to the return pipe space (14i).

2. The fuel supply system of claim 1, wherein the fuel pipe space (11i, 11o) is an annular fuel pipe space (11i, 11o) surrounding the fuel line (12) and/or wherein the return pipe space (14i, 14o) is an annular return pipe space (14i, 14o) surrounding the return line (13).

3. The fuel supply system of any one of the claims 1 to 2, wherein the fuel pipe space (11i) is fluidly connected or connectable to the return pipe space (14i).

4. The fuel supply system of any one of the preceding claims, wherein at least one of
- the fuel pipe (10) has a fuel pipe partition (16) to sealingly separate a first fuel pipe space from a second fuel pipe space, wherein the first fuel pipe space is arranged closer to the fuel injector (1) than the second fuel pipe space in a flow direction of fuel; and
- the return pipe (13) has a return pipe partition (17) to sealingly separate a first return pipe space from a second return pipe space, wherein the first return pipe space is arranged closer to the injector (1) than the second return pipe space in a flow direction.

5. The fuel supply system of claim 4, wherein the fuel supply system (100) comprises an inside space bypass (18i) fluidly connecting the first fuel pipe space with the first return pipe space.

6. The fuel supply system of any one of the claims 4 to 5, wherein the fuel supply system (100) comprises an outside space bypass (18o) connecting the second fuel pipe space with the second return pipe space.

7. The fuel supply system of any one of the claims 4 to 6, wherein the at least one of
- the first fuel pipe space is connected or connectable to a ventilation supply or fluid extraction system,
- the first return pipe space is connected or connectable to a ventilation supply or fluid extraction system,
- the second fuel pipe space is connected or connectable to a ventilation supply or fluid extraction system, and
- the second return pipe space is connected or connectable to a ventilation supply or fluid extraction system.

8. The fuel supply system of any one of the preceding claims, wherein the extraction line (20) is completely arrangeable inside the engine room (226).

9. The fuel supply system of any one of the preceding claims, wherein the extraction line (20) is connected or connectable to a low-pressure source (30), in particular comprising a vacuum ejector.

10. The fuel supply system of any one of the preceding claims, further comprising a leakage detector (55), in particular a gas sensor, for detecting a fuel leakage from the fuel line (12) to the fuel pipe space (11i, 11o) and/or from the return line (15) to the return pipe space (14i, 14o),
and in particular wherein the leakage detector (55) is fluidly connectable or connected to the extraction line (20).

11. An internal combustion engine having at least one cylinder with a bore having a diameter of at least 200 mm, arrangeable in an engine room (226) and comprising a fuel supply system (100) of any one of the preceding claims.

12. The internal combustion engine of claim 11, comprising a low-pressure source (30), in particular arrangeable in the engine room (226), wherein the extraction line (20) is connected or connectable to the low-pressure source (30), and wherein the low-pressure source (30) comprises at least one of the group consisting of a suction pump, a vacuum ejector, a turbocharger, and a vacuum compressor.

13. The internal combustion engine of any one of the claims 11 to 12, configured such that leaked fuel is guidable into an exhaust gas stream of the engine, in particular into a funnel.

14. The internal combustion engine of any one of the claims 11 to 13, comprising a leakage treatment system (40), in particular arrangeable in the engine room (226), and wherein at least one of the fuel pipe space (11i, 11o), the return pipe space (14i, 14o), and the extraction line (20), is fluidly connected or connectable to the leakage treatment system (40) for guiding leaked fuel into the leakage treatment system (40).

15. The internal combustion engine of claim 14, further comprising an exhaust gas manifold (45), wherein the leakage treatment system (40) is at least partly arranged within the exhaust gas manifold (45).

16. The internal combustion engine of any one of the claims 11 to 15, comprising a turbocharger and configured such that leaked fuel is guidable into a scavenge air inlet upstream of a compressor of the turbocharger.

17. A propulsion system, in particular for a marine vessel, comprising an internal combustion engine of any one of the claims 11 to 16 and an engine room (226) for housing at least one cylinder of the internal combustion engine and for at least partially housing the fuel supply system of any one of the claims 1 to 10.

18. A marine vessel, comprising a propulsion system of claim 17 and/or an internal combustion engine of any one of the claims 11 to 16, and an engine room (226) for housing at least one cylinder of the internal combustion engine and for at least partially housing the fuel supply system of any one of the claims 1 to 10.

19. A use of a vacuum ejector for extracting leaked fuel, in particular methanol, ammonia, LNG, or LPG, in an internal combustion engine, preferably of any one of the claims 11 to 16, preferably out of a fuel pipe space (11i) and/or a return pipe space (14i) of a fuel supply system of any one of the claims 1 to 10.

20. A method for operating an internal combustion engine of any one of the claims 11 to 16, the method comprising a step of
- creating, in particular by means of a vacuum ejector, an underpressure below atmospheric pressure, preferable a pressure lower than 0.8 bar absolute, in at least one of the fuel pipe space (11i), the return pipe space (14i), and the extraction line (20),
and at least one step of
- guiding, by means of said underpressure, leaked fuel out of the fuel pipe space (11i, 11o), and
- guiding, by means of said underpressure, leaked fuel out of the return pipe space (14i, 14o).

21. The method of claim 20 comprising at least one step of
- guiding the leaked fuel into an exhaust gas stream of the internal combustion engine, in particular into an exhaust gas manifold and/or into a funnel,
- guiding the leaked fuel into a scavenge air inlet upstream of a compressor of a turbocharger (240), and
- guiding the leaked fuel into a leakage treatment system (40).
